# EUROPEAN PATENT APPLICATION

(11) **EP 3 780 237 A1**
(43) Date of publication of application: **17.02.2021**
(21) Application number: 20758838.5
(22) Date of filing: 06.01.2020
(51) Int. Cl.: H01M 10/0583, H01M 2/26, H01M 10/052, H01M 10/04, H01M 4/139

(54) **UNIT CELL AND MANUFACTURING METHOD THEREFOR**

(30) Priority: 22.02.2019 KR 20190021382
(71) Applicant: LG CHEM, LTD., Yeongdeungpo-gu, Seoul 07336 (KR)
(72) Inventor: KWON, Joon, Daejeon 34122 (KR)
(74) Representative: Plasseraud IP
(86) International application number: PCT/KR2020/000167
(87) International publication number: WO 2020/171376

(57) **Abstract**

A unit cell according to the present invention comprises: a separator; a positive electrode in which a positive electrode active material is applied to a surface of a positive electrode collector, and the positive electrode active material is stacked to contact one surface of the separator; and a negative electrode in which a negative electrode active material is applied to a surface of a negative electrode collector, and the negative electrode active material is stacked to contact the other surface of the separator, wherein the negative electrode, the separator, and the positive electrode are stacked and then folded in a zigzag shape to form a plurality of wrinkles.

A method for manufacturing a unit cell according to the present invention comprises: a step of applying a positive electrode active material to a surface of a positive electrode collector; a step of applying a negative electrode active material to a surface of a negative electrode collector; a step of stacking a negative electrode, a separator, and a positive electrode so that the positive electrode active material contacts one surface of the separator, and a negative electrode active material contacts the other surface of the separator; and a step of folding the negative electrode, the separator, and the positive electrode, which are stacked, to form wrinkles.

## Description

### CROSS-REFERENCE TO RELATED APPLICATION

The present application claims the benefit of the priority of Korean Patent Application No. 10-2019-0021382, filed on February 22, 2019, which is hereby incorporated by reference in its entirety.

### TECHNICAL FIELD

The present invention relates to a unit cells in which a negative electrode, a separator, and a positive electrode are sequentially stacked, and more particularly, to a unit cell having a structure that is advantageous in improving performance due to more smooth movement of ions and electrons when compared to a structure of a unit cell according to related art, and a method for manufacturing the same.

### BACKGROUND ART

Batteries storing electrical energy may be generally classified into primary batteries and a secondary batteries. Such a primary battery is a disposable consumable battery. On the other hand, such a secondary battery is a chargeable battery that is manufactured by using a material in which oxidation and reduction processes between current and the material are capable of being repeated. That is, when the reduction reaction to the material is performed by the current, power is charged. When the oxidation reaction to the material is performed by the current, power is discharged. Such charging-discharging are repeatedly performed to generate electricity.

In general, secondary batteries comprise nickelcadmium batteries, nickel-hydrogen batteries, lithium ion batteries, and lithium ion polymer batteries. Such a secondary battery is being applied to and used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

The lithium secondary battery is generally formed by laminating a positive electrode (i.e., cathode), a separator, and a negative electrode (i.e., anode). Also, materials of the positive electrode, the separator, and the negative electrode may be selected in consideration of battery lifespan, charging/discharging capacities, temperature characteristics, stability, and the like. The charging and discharging of the lithium secondary battery are performed while lithium ions are intercalated and deintercalated from lithium metal oxide of the positive electrode to the negative electrode.

In general, unit cells, each of which has a three-layered structure of a positive electrode/a separator/a negative electrode or a five-layered structure of a positive electrode/a separator/a negative electrode/a separator/a positive electrode or a negative electrode/a separator/a positive electrode/a separator/a negative electrode, are assembled to constitute one electrode assembly. Also, the electrode assembly is accommodated in a case such as a cylindrical can and a prismatic pouch.

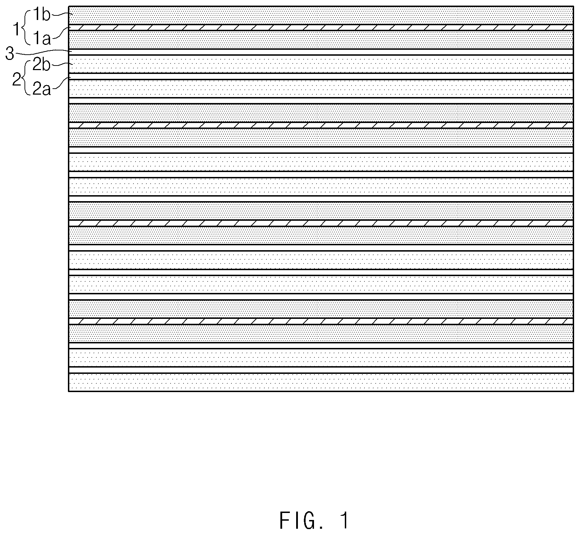

As illustrated in FIG. 1, which illustrates a side view of a general electrode assembly, a positive electrode 1 has a structure in which a positive electrode active material 1b is applied to both surfaces of a positive electrode collector 1a, and a negative electrode 2 has a structure in which a negative electrode active material 2b is applied to both surfaces of a negative electrode collector 2a. Also, the separator 3 is disposed between the positive electrode 1 and the negative electrode 2 to provide a function of preventing the positive electrode 1 and the negative electrode 2 from contacting each other, but allowing the movement of the electrons and ions.

The electrode assembly is fixed in shape and volume according to a size of the secondary battery. Thus, in the above structure, the stacking number of unit cells is also fixed. However, when the stacking number of unit cells increases, a process time taken to stack the unit cells may be reduced to increase in production time.

Alternatively, a method of increasing in thickness of the active material and the collector may be adopted to reduce the stacking number of unit cells and maintain the shape and volume of the electrode assembly.

However, when the active material and/or the collector increases in thickness, there is a problem that resistance increases in proportion to the increase in moving distance when the ions and electrons move from the positive electrode collector 1a to the negative electrode collector 2a. Particularly, in recent years, as the demand of the high-capacity secondary battery increases, the secondary battery increases in size. Thus, the increase in internal resistance may adversely affect the performance of the secondary battery.

### DISCLOSURE OF THE INVENTION

### TECHNICAL PROBLEM

Therefore, a main object of the present invention is to provide a unit cell having a new structure in which a distance between a positive electrode collector and a negative electrode collector is minimized to solve a problem that resistance increases when ions and electrons move, thereby improving battery performance, and a method for manufacturing the same.

### TECHNICAL SOLUTION

A unit cell according to the present invention for achieving the above object comprises: a separator; a positive electrode in which a positive electrode active material is applied to a surface of a positive electrode collector, and the positive electrode active material is stacked to contact one surface of the separator; and a negative electrode in which a negative electrode active material is applied to a surface of a negative electrode collector, and the negative electrode active material is stacked to contact the other surface of the separator, wherein the negative electrode, the separator, and the positive electrode are stacked and then folded in a zigzag shape to form a plurality of wrinkles.

The positive electrode active material may be applied to only one surface of the positive electrode collector, which faces the separator, and the negative electrode collector may be applied to only one surface of the negative electrode collector, which faces the separator.

Also, the wrinkles formed by folding the negative electrode, the separator, and the positive electrode, which are stacked, may be continuously formed.

Here, a negative electrode overlapping portion at which folding portions of the negative electrode collector overlap and contact each other when the negative electrode collector is folded and a positive electrode overlapping portion at which folding portions of the positive electrode collector overlap and contact each other when the positive electrode collector may be disposed parallel to each other, and a negative electrode exposing surface, which connects the adjacent negative electrode overlapping portions to each other and is exposed to the outside in the negative electrode collector, and a positive electrode exposing surface, which connects the adjacent positive electrode overlapping portions to each other and is exposed to the outside in the positive electrode collector, may form one surface and the other surface of the unit cell, and

a vertical distance between the negative electrode exposing surface and the positive electrode exposing surface may be constantly maintained.

One end of the positive electrode collector may extend without being coated with the positive electrode active material to form a positive electrode tab, and one end of the negative electrode collector may extend without being coated with the negative electrode active material to form a negative electrode tab, and the positive electrode tab and the negative electrode tab may be disposed at positions opposite to each other.

Therefore, in the present invention, the plurality of unit cells having the above configuration may be connected to each other to provide an electrode assembly and also a secondary battery on which the electrode assembly is mounted.

Furthermore, the present invention provides a method for manufacturing the above-described unit cell.

A method for manufacturing a unit cell according to the present invention comprises: a step of applying a positive electrode active material to a surface of a positive electrode collector; a step of applying a negative electrode active material to a surface of a negative electrode collector; a step of stacking a negative electrode, a separator, and a positive electrode so that the positive electrode active material contacts one surface of the separator, and a negative electrode active material contacts the other surface of the separator; and a step of folding the negative electrode, the separator, and the positive electrode, which are stacked, to form wrinkles.

In the step of applying the positive electrode active material, the positive electrode active material may be applied to only one surface of the positive electrode collector, which faces the separator, and in the step of applying the negative electrode active material, the negative electrode active material may be applied to only one surface of the negative electrode collector, which faces the separator.

Also, the folding may be repeatedly performed to continuously form the wrinkles.

### ADVANTAGEOUS EFFECTS

According to the present invention having the above technical features, the distance between the negative electrode collector and the positive electrode collector may be relatively reduced in comparison to the structure according to the related art to allow the ions and electrons to smoothly move, thereby improving the performance of the secondary battery.

In addition, the negative electrode overlapping portion and the positive electrode overlapping portion may be disposed parallel to each other in the direction perpendicular to the vertical direction (the direction in which the positive electrode and the negative electrode are stacked) to allow the ions and electrons to smoothly move in various directions.

In addition, since the collector is exposed to the outside rather than the active material, the problem in which the lithium is precipitated due to the movement of the ions may be prevented.

Furthermore, in the unit cell according to the present invention, since each of the positive electrode exposing surface and the negative electrode exposing surface has the flat shape, the easy stacking may be realized, like the structure according to the related art.

### BRIEF DESCRIPTION OF THE DRAWINGS

FIG. 1 is a side view illustrating a side surface of a general electrode assembly.
FIG. 2 is a side view illustrating states before and after a positive electrode, a separator, and a negative electrode are stacked according to the present invention.
FIG. 3 is a side view illustrating a state in which the positive electrode, the separator, and the negative electrode are stacked and then folded in a zigzag shape to form wrinkles after .
FIG. 4 is a side view illustrating a state in which a plurality of unit cells are stacked according to the present invention.

### MODE FOR CARRYING OUT THE INVENTION

Hereinafter, preferred embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein.

In order to clearly illustrate the present invention, parts that are not related to the description are omitted, and the same or similar components are denoted by the same reference numerals throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention relates to a unit cell 100 in which a distance between a positive electrode collector 10a and a negative electrode collector 20a is minimized to reduce resistance when ions and electrons move, and a method for manufacturing the same. Hereinafter, embodiments according to the present invention will be described in more detail with reference to the accompanying drawings.

### First Embodiment

A method for manufacturing a unit cell 100 in which a distance between a positive electrode collector 10a and a negative electrode collector 20a is minimized will be described according to a first embodiment.

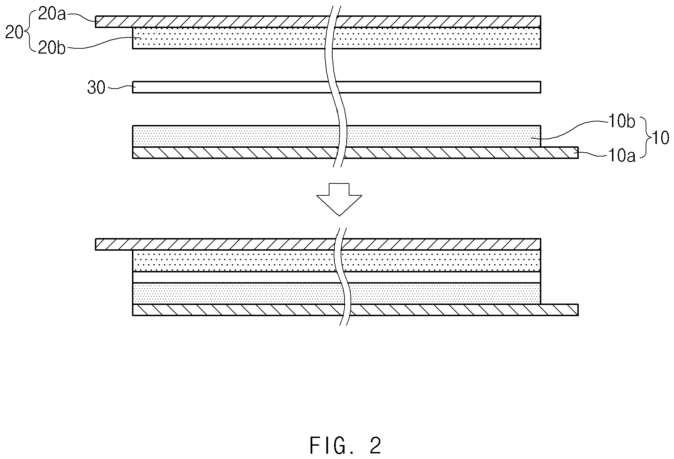

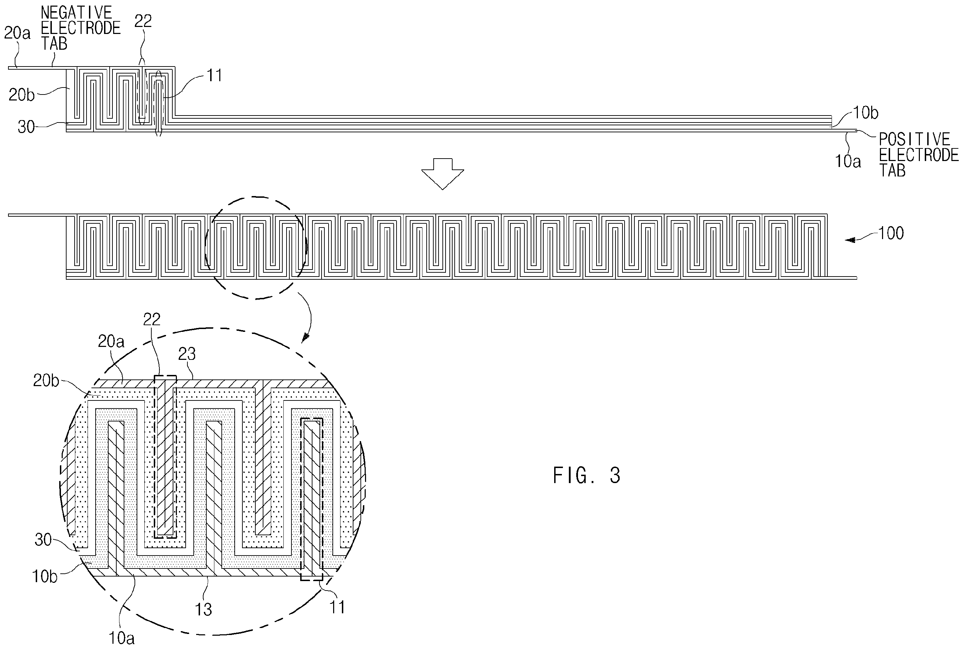

FIG. 2 is a side view illustrating states before and after a positive electrode 10, a separator 30, and a negative electrode 20 are stacked according to the present invention, and FIG. 3 is a side view illustrating a state in which the positive electrode, the separator, and the negative electrode are stacked and then folded in a zigzag shape to form wrinkles after .

Referring to FIGS. 2 and 3, in the manufacturing method according to this embodiment, a single-sided positive electrode and a single-sided negative electrode are provided. That is, the manufacturing method according to this embodiment of the present invention comprises a step of applying a positive electrode active material 10b to one surface of the positive electrode collector 10a and a step of applying a negative electrode active material 20b to one surface of the negative electrode collector 20a.

Here, each of the positive electrode collector 10a and the negative electrode collector 20a may be made of the same material as each of the positive electrode collector and the negative electrode collector according to the related art. Here, each of the positive electrode collector 10a and the negative electrode collector 20a may have an area and size that are enough to continuously form wrinkles, and also, each of the positive electrode active material 10b and the negative electrode active material 20b may be applied to have a thickness at which each of the positive electrode active material 10b and the negative electrode active material 20b is continuously foldable.

Also, each of the positive electrode collector 10a and the negative electrode collector 20a may be provided with a portion that protrudes from an end of one side without being coated with the positive electrode active material 10b and the negative electrode active material 20b in FIG. 3.

That is, as illustrated in FIG. 3, ends of the positive electrode collector 10a and the negative electrode collector 20a may protrude to be distinguished from the portions, on which the wrinkles are formed, so as to limit areas coated with the positive electrode active material and the negative electrode active material so that a positive electrode tab and a negative electrode tab are formed.

Also, the negative electrode 20 and the positive electrode 10 may be stacked so that the surfaces coated with the negative electrode active material 20b and the positive electrode active material 10b face each other, and the separator 30 is inserted between the negative electrode 20 and the positive electrode 10. That is, the negative electrode 20, the separator 30, and the positive electrode 10 are stacked so that the separator 30 has one side contacting the positive electrode active material 10b and the other surface contacting the negative electrode active material 20b.

Here, as described above, the negative electrode 20 and the positive electrode 10 are stacked so that the negative electrode tab protrudes to a left side, and the positive electrode tab protrudes to a right side (in FIG. 2).

In the stacking as described above, as illustrated in FIG. 3, a process of folding the unit cell 100 to continuously form wrinkles from one end of the unit cell 100 is performed.

The wrinkles are formed by continuously folding the negative electrode 20, the separator 30, and the positive electrode 10 in the zigzag direction. Here, it is preferable that a negative electrode overlapping portion 22 at which folding portions of the negative electrode collector 20a contact each other when the negative electrode collector 20a is folded and a positive electrode overlapping portion 11 at which folding portions of the positive electrode collector 10a contact each other when the positive electrode collector 10a is folded are folded parallel to each other.

Furthermore, in order that an outer surface (a surface through which each of the negative electrode collector and the positive electrode collector is exposed) of the unit cell 100 is flat so that a plurality of unit cells 100 having the wrinkles are stacked, a negative electrode exposing surface 23, which connects the negative electrode overlapping portions 22 adjacent to the negative electrode collector 20a to each other and is exposed to the outside, and a positive electrode exposing surface 13, which connects the positive electrode overlapping portions adjacent to the positive electrode collector 10a to each other and is exposed to the outside, respectively form one surface and the other surface of the unit cell 100, and a vertical distance between the negative electrode exposing surface 23 and the positive electrode exposing surface 13 is constantly maintained.

Here, the positive electrode tab extending from an end of the positive electrode 10 without being coated with the positive electrode active material and the negative electrode tab extending from an end of the negative electrode 20 without being coated with the negative electrode active material are disposed at sides opposite to each other and have sufficient lengths so as to be respectively connected to the negative electrode tabs and the positive electrode tabs of the other unit cells.

For reference, in this embodiment, the separator 30 has sufficient durability and flexibility to prevent the negative electrode active material 20b and the positive electrode active material 10a from contacting each other while the separator 30 is folded and also provide sufficient flexibility to prevent the active materials from being damaged while the negative electrode 20 and the positive electrode 10 are folded.

### Second Embodiment

A unit cell 100 in which a distance between a positive electrode collector 10a and a negative electrode collector 20a is minimized will be described according to a second embodiment.

The unit cell 100 according to the present invention has a feature in which a negative electrode 20, a separator 30, and a positive electrode 10 are stacked one by one and then continuously folded in a zigzag shape to form a plurality of wrinkles.

In the positive electrode, a positive electrode active material 10b is applied to only one surface of a positive electrode collector 10a, and in the negative electrode 20, a negative electrode active material 20b is applied to only one surface of a negative electrode collector 20a. The positive electrode 10 and the negative electrode 20 are stacked so that the positive electrode active material 10b and the negative electrode active material 20b face each other with the separator 30 therebetween. Here, each of the positive electrode 10, the separator 30, and the negative electrode 20 are repeatedly bent in the zigzag shape to form the plurality of wrinkles.

Also, the positive electrode collector 10a and the negative electrode collector 20a protrude to one side of the potion, at which the wrinkles are formed, in the state in which the positive electrode active material 10b and the negative electrode active material 20b are not applied, thereby forming a positive electrode tab and a negative electrode tab.

Furthermore, a positive electrode overlapping portion 11 and a negative electrode overlapping portion 22 that are portions, at which the positive electrode collector 10a and the negative electrode collector 20a overlap and contact each other between the wrinkles, are formed so that a distance between the positive electrode collector 10a and the negative electrode collector 20a is reduced to be constantly maintained.

Also, the positive electrode overlapping portion 11 and the negative electrode overlapping portion 22 are disposed parallel to each other while being maintained at a predetermined distance to be adjacent to each other along a longitudinal direction. As described above, since the positive electrode overlapping portion 11 and the negative electrode overlapping portion 22 have a symmetrical structure to be parallel to each other, durability against an external impact, i.e., lateral force (force applied along the longitudinal direction of the unit cell) may more increase, and also, the uniform thickness may be maintained.

Furthermore, in the negative electrode collector 20a, the negative electrode exposing surface 23 that connects the adjacent negative electrode overlapping portions 22 to each other and is exposed to the outside forms an outer surface of the negative electrode 20, and in the positive electrode collector 10a, the positive electrode exposing surface 13 that connects the adjacent positive electrode overlapping portions 11 to each other and is exposed to the outside forms an outer surface of the positive electrode 10.

Also, each of the negative electrode exposing surface 23 and the positive electrode exposing surface 13 is flat (or has a flat shape as a whole even if some grooves are formed in the portions at which the positive electrode overlapping portion and the negative electrode overlapping portion are formed), and a vertical distance between the negative electrode exposing surface 23 and the positive electrode exposing surface 13 is constantly maintained. That is, the unit cell 100 according to the present invention has a uniform thickness along the longitudinal direction.

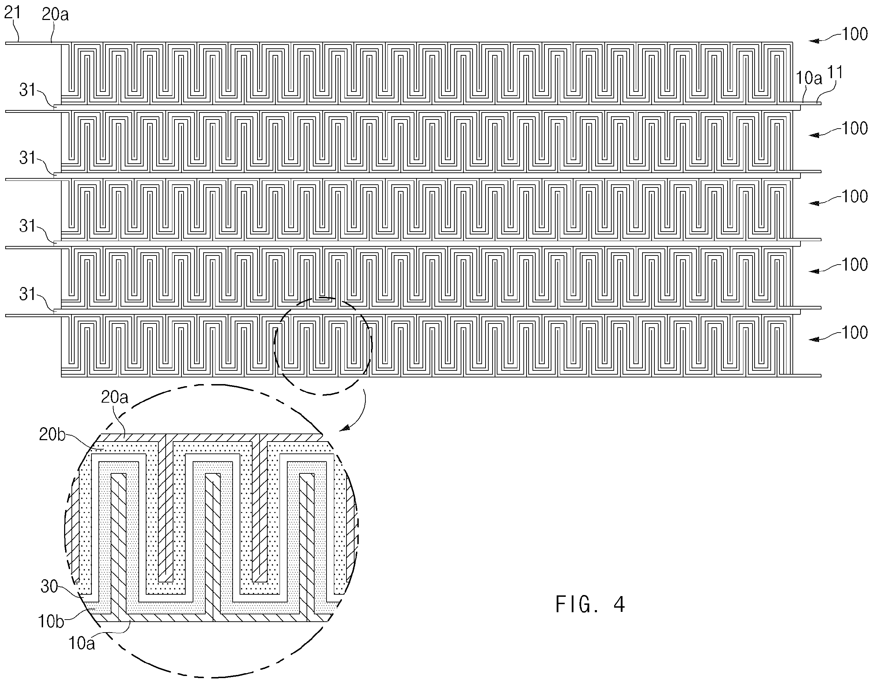

Accordingly, as illustrated in FIG. 4, in which the plurality of unit cells 100 are stacked, the plurality of unit cells 100 according to this embodiment may be stacked to constitute an electrode assembly. Here, a separate separator 31 may be disposed between the adjacent unit cells 100 as illustrated in FIG. 4.

However, for example, when the unit cell (i.e., the unit cell in which the stacking positions of the negative electrode and the positive electrode are reversed in FIG. 2) on which the negative electrode collector 20a is disposed on a lower layer thereof is stacked on the unit cell on which the negative electrode collector 20a is disposed on an upper layer thereof, the unit cells may be stacked without adding the separate separator 31.

Therefore, in the present invention, the plurality of unit cells having the above configuration may be connected to each other to additionally provide an electrode assembly and a secondary battery on which the electrode assembly is mounted.

According to the present invention having the above technical features, the distance between the negative electrode collector 20a and the positive electrode collector 10a may be relatively reduced in comparison to the structure according to the related art to allow the ions and electrons to smoothly move, thereby improving the performance of the secondary battery.

In addition, the ions and electrons may smoothly move in the vertical direction (in which the negative electrode and the positive electrode are stacked) as well as the direction perpendicular to the vertical direction.

In addition, since the collector is exposed to the outside rather than the active material, the problem in which the lithium is precipitated due to the movement of the ions may be prevented.

Furthermore, in the unit cell according to the present invention, since each of the positive electrode exposing surface and the negative electrode exposing surface has the flat shape, the easy stacking may be realized, like the structure according to the related art.

While the embodiments of the present invention have been described with reference to the specific embodiments, it will be apparent to those skilled in the art that various changes and modifications may be made without departing from the spirit and scope of the invention as defined in the following claims.

## Claims

1. A unit cell comprising:
a separator;
a positive electrode in which a positive electrode active material is applied to a surface of a positive electrode collector, and the positive electrode active material is stacked to contact one surface of the separator; and
a negative electrode in which a negative electrode active material is applied to a surface of a negative electrode collector, and the negative electrode active material is stacked to contact the other surface of the separator,
wherein the negative electrode, the separator, and the positive electrode are stacked and then folded in a zigzag shape to form a plurality of wrinkles.

2. The unit cell of claim 1, wherein the positive electrode active material is applied to only one surface of the positive electrode collector, which faces the separator, and the negative electrode active material is applied to only one surface of the negative electrode collector, which faces the separator.

3. The unit cell of claim 2, wherein the wrinkles formed by folding the negative electrode, the separator, and the positive electrode, which are stacked, are continuously formed.

4. The unit cell of claim 3, wherein a negative electrode overlapping portion at which folding portions of the negative electrode collector overlap and contact each other when the negative electrode collector is folded and a positive electrode overlapping portion at which folding portions of the positive electrode collector overlap and contact each other when the positive electrode collector are disposed parallel to each other.

5. The unit cell of claim 4, wherein a negative electrode exposing surface, which connects the adjacent negative electrode overlapping portions to each other and is exposed to the outside in the negative electrode collector, and a positive electrode exposing surface, which connects the adjacent positive electrode overlapping portions to each other and is exposed to the outside in the positive electrode collector, form one surface and the other surface of the unit cell, and
a vertical distance between the negative electrode exposing surface and the positive electrode exposing surface is constantly maintained.

6. The unit cell of claim 1, wherein one end of the positive electrode collector extends without being coated with the positive electrode active material to form a positive electrode tab, and one end of the negative electrode collector extends without being coated with the negative electrode active material to form a negative electrode tab, and
the positive electrode tab and the negative electrode tab are disposed at positions opposite to each other.

7. A secondary battery manufactured by connecting the plurality of unit cells of any one of claims 1 to 6 to each other.

8. A method for manufacturing a unit cell, the method comprising:
a step of applying a positive electrode active material to a surface of a positive electrode collector;
a step of applying a negative electrode active material to a surface of a negative electrode collector;
a step of stacking a negative electrode, a separator, and a positive electrode so that the positive electrode active material contacts one surface of the separator, and the negative electrode active material contacts the other surface of the separator; and
a step of folding the negative electrode, the separator, and the positive electrode, which are stacked, to form wrinkles.

9. The method of claim 8, wherein, in the step of applying the positive electrode active material, the positive electrode active material is applied to only one surface of the positive electrode collector, which faces the separator, and
in the step of applying the negative electrode active material, the negative electrode active material is applied to only one surface of the negative electrode collector, which faces the separator.

10. The method of claim 9, wherein the folding is repeatedly performed to continuously form the wrinkles.
